# EUROPEAN PATENT APPLICATION

(11) **EP 2 639 254 A1**
(43) Date of publication of application: **18.09.2013**
(21) Application number: 12184364.3
(22) Date of filing: 14.09.2012
(51) Int. Cl.: C08G 63/06, C08L 67/04

(54) **Crosslinked polymer compound, resin composition and resin molded product**

(30) Priority: 13.03.2012 JP 2012055936
(71) Applicant: Fuji Xerox Co., Ltd., Minato-ku, Tokyo (JP)
(72) Inventor: Yao, Kenji, Minamiashigara-shi, Kanagawa (JP); Kawashima, Manabu, Minamiashigara-shi, Kanagawa (JP); Mikami, Masato, Minamiashigara-shi, Kanagawa (JP)
(74) Representative: Lewin, David Nicholas

(57) **Abstract**

There is provided a crosslinked polymer compound, including: a crosslinked structure formed by reaction of a carboxyl group of polylactic acid having at least a carboxyl group at an end of a polymer chain of the polylactic acid with a hydroxyl group of a lignophenol derivative having at least a hydroxyl group in a molecular structure of the lignophenol derivative, wherein the compound comprises a high-molecular weight component insoluble in hexafluoroisopropanol and a low-molecular weight component soluble in hexafluoroisopropanol, a content ratio of the high-molecular weight component is from 2% by mass to 75% by mass based on the total amount of the high-molecular weight component and the low-molecular weight component, and the low-molecular weight component has a weight average molecular weight of 100,000 or more.

## Description

### BACKGROUND

### 1. Field

The present invention relates to a crosslinked polymer compound, a resin compound and a resin molded product.

### 2. Description of the Related Art

From the viewpoint of reducing environmental load, lignophenol derivatives obtained from plants are a material which draws attention as one of candidates of non-petroleum-based resin materials.

For a resin composition using the lignophenol derivative, it is disclosed, for example, in Japanese Patent Application Laid-Open No. 2008-274068 that the resin composition is a lignophenol-polylactic acid composite having at least three branched-chains consisting of polylactic acid in a molecule, and the lignophenol-polylactic acid composite is obtained by a process of ring-opening polymerization of lactide by using lignophenol having at least three hydroxyl groups in a molecule as an initiator.

An object of the present invention is to provide a crosslinked polymer compound capable of forming a resin molded product having excellent flexibility.

### SUMMARY

(1) A crosslinked polymer compound, including: a crosslinked structure formed by reaction of a carboxyl group of polylactic acid having at least a carboxyl group at an end of a polymer chain of the polylactic acid with a hydroxyl group of a lignophenol derivative having at least a hydroxyl group in a molecular structure of the lignophenol derivative, wherein the compound comprises a high-molecular weight component insoluble in hexafluoroisopropanol and a low-molecular weight component soluble in hexafluoroisopropanol, a content ratio of the high-molecular weight component is from 2% by mass to 75% by mass based on the total amount of the high-molecular weight component and the low-molecular weight component, and the low-molecular weight component has a weight average molecular weight of 100,000 or more.
(2) The crosslinked polymer compound according to (1), wherein the low-molecular weight component has a molecular weight distribution, which is represented as "weight average molecular weight/ number average molecular weight", of from 10 to 20.
(3) The crosslinked polymer compound according to (1) or (2),
   wherein a mass ratio of a content of a component derived from the lignophenol derivative to a content of a component derived from the polylactic acid is from 0.1% by mass to 10% by mass.
(4) The crosslinked polymer compound according to any one of (1) to (3),
   wherein the content ratio of the high-molecular weight component is from 7% by mass to 65% by mass based on the total amount of the high-molecular weight component and the low-molecular weight component.
(5) The crosslinked polymer compound according to any one of (1) to (4),
   wherein the low-molecular weight component has a molecular weight distribution, which is represented as "weight average molecular weight/ number average molecular weight", of from 14 to 17.
(6) The crosslinked polymer compound according to any one of (1) to (5),
   wherein the lignophenol derivative is represented by Formula (1): 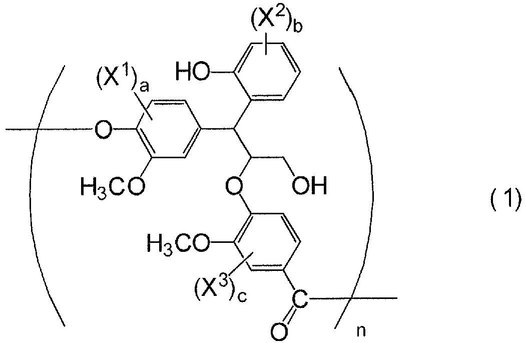 wherein,
   each of X¹, X² and X³ independently represents a substituted or unsubstituted alkyl group, a substituted or unsubstituted alkoxy group, a substituted or unsubstituted aryl group, a substituted or unsubstituted arylene group, a hydroxyl group, a carboxyl group, an amino group or an amide group, each of a and c represents an integer of from 0 to 3, b represents an integer of from 0 to 4, and n represents an integer of from 10 to 5000.
(7) The crosslinked polymer compound according to any one of (1) to (5),
   wherein the lignophenol derivative represented by one selected from the group consisting of Formula (2), Formula (3) and Formula (4): 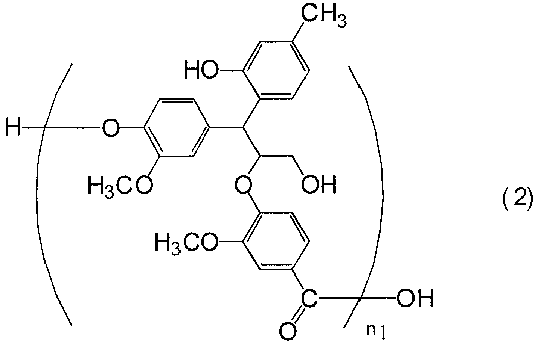 wherein n1 represents an integer of from 10 to 5000: 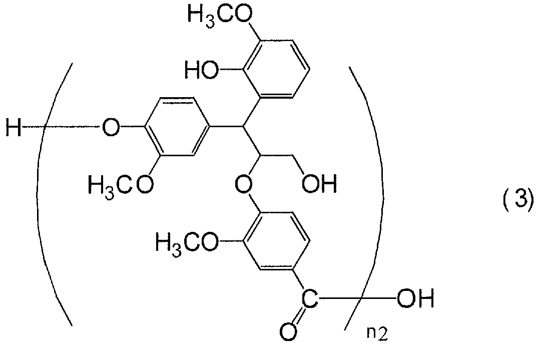 wherein n2 represents an integer of from 10 to 5000: 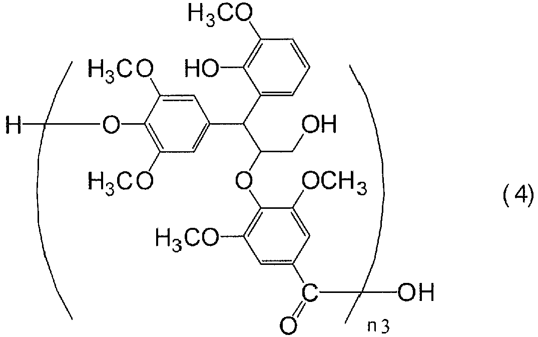 wherein n3 represents an integer of from 10 to 5000.
(8) The crosslinked polymer compound according to any one of (1) to (7), wherein the lignophenol derivative has a ratio of a weight average molecular weight to a number average molecular weight of from 3 to 10.
(9) A resin composition comprising the crosslinked polymer compound according to any one of (1) to (8).
(10) The resin composition according to (9), further comprising condensed ester phosphate.
(11) The resin composition according to (9) or (10), wherein the condensed ester phosphate has an amount of from 1 part by mass to 30 parts by mass based on the 100 parts by mass of the resin composition.
(12) A resin molded product including the crosslinked polymer compound according to any one of (1) to (8).
(13) The resin molded product according to (12), further including condensed ester phosphate.
(14) The resin molded product according to (12) or (13),
wherein the condensed ester phosphate has an amount of from 1 part by mass to 30 parts by mass based on the 100 parts by mass of the resin molded product.

According to an exemplary embodiment recited in claim 1, provided is a crosslinked polymer compound capable of forming a resin molded product having excellent flexibility, as compared with the case that fails to satisfy the requirement that the compound has a crosslinked structure formed by reaction of a carboxyl group at an end of a polymer chain of polylactic acid with a hydroxyl group of a lignophenol derivative, and, based on the total amount of a high-molecular weight component insoluble in hexafluoroisopropanol and a low-molecular weight component soluble in hexafluoroisopropanol, the high-molecular weight component has a content ratio of from 2% by mass to 75% by mass, and that the low-molecular weight component has a weight average molecular weight (Mw) of 100,000.

According to an exemplary embodiment recited in claim 2, provided is a crosslinked polymer compound capable of forming a resin molded product having excellent flexibility, as compared with the case where a molecular weight distribution (weight average molecular weight Mw/number average molecular weight Mn) of the low-molecular weight component is not from 10 to 20.

According to an exemplary embodiment recited in claim 3, provided is a crosslinked polymer compound capable of forming a resin molded product having excellent flexibility, as compared with the case where a mass ratio of a content (N) of a component derived from the polylactic acid and a content (L) of a component derived from the lignophenol derivative (L/N× 100) is not from 0.1% by mass to 10% by mass.

According to an exemplary embodiment recited in claim 4, provided is a crosslinked polymer compound capable of forming a resin molded product having excellent flexibility, as compared with the case where the content ratio of the high-molecular weight component is not from 7% by mass to 65% by mass based on the total amount of the high-molecular weight component and the low-molecular weight component.

According to an exemplary embodiment recited in claim 5, provided is a crosslinked polymer compound capable of forming a resin molded product having excellent flexibility, as compared with the case where the low-molecular weight component does not have a molecular weight distribution, which is represented as "weight average molecular weight/ number average molecular weight", of from 14 to 17.

According to an exemplary embodiment recited in claim 6, provided is a crosslinked polymer compound capable of forming a resin molded product having excellent flexibility, as compared with the case where the lighnophenol derivative is not represented by Formula (1).

According to an exemplary embodiment recited in claim 7, provided is a crosslinked polymer compound capable of forming a resin molded product having excellent flexibility, as compared with the case where the lingophenol derivative is not represented by one selected from the group consisting of Formula (2), Formula (3) and Formula (4).

According to an exemplary embodiment recited in claim 8, provided is a crosslinked polymer compound capable of forming a resin molded product having excellent flexibility, as compared with the case where the lignophenol derivative does not have a ratio of a weight average molecular weight to a number average molecular weight of from 3 to 10.

According to an exemplary embodiment recited in claim 9, provided is a resin composition capable of forming a resin molded product having excellent flexibility, as compared with the case where a crosslinked polymer compound is not included, in which the compound satisfies the requirement to have a crosslinked structure formed by reaction of a carboxyl group at an end of a polymer chain of polylactic acid with a hydroxyl group of a lignophenol derivative, and, based on the total amount of a high-molecular weight component insoluble in hexafluoroisopropanol and a low-molecular weight component soluble in hexafluoroisopropanol, the high-molecular weight component has a content ratio of from 2% by mass to 75% by mass, and the low-molecular weight component has a weight average molecular weight (Mw) of 100,000.

According to an exemplary embodiment recited in claim 10, provided is a resin composition having excellent flame retardancy, as compared with the case where condensed phosphate ester is not included.

According to an exemplary embodiment recited in claim 11, provided is a resin composition having excellent flame retardancy, as compared with the case where the condensed ester phosphate does not have an amount of from 1 part by mass to 30 parts by mass based on the 100 parts by mass of the resin composition.

According to the invention of claim 12, provided is a resin molded product having excellent flexibility, as compared with the case where a crosslinked polymer compound is not included, which satisfies the requirement in which the compound has a crosslinked structure formed by reaction of a carboxyl group at an end of a polymer chain of polylactic acid with a hydroxyl group of a lignophenol derivative, and, based on the total amount of a high-molecular weight component insoluble in hexafluoroisopropanol and a low-molecular weight component soluble in hexafluoroisopropanol, the high-molecular weight component has a content ratio of from 2% by mass to 75% by mass, and the low-molecular weight component has a weight average molecular weight (Mw) of 100,000.

According to the invention of claim 13, provided is a resin molded product having excellent flame retardancy, compared to the case in which condensed phosphate ester is not included.

According to an exemplary embodiment recited in claim 14, provided is a resin molded product having excellent flame retardancy, as compared with the case where the condensed ester phosphate does not have an amount of from 1 part by mass to 30 parts by mass based on the 100 parts by mass of the resin composition.

### BRIEF DESCRIPTION OF DRAWINGS

Exemplary embodiments of the present invention will be described in detail based on the following figure, wherein:

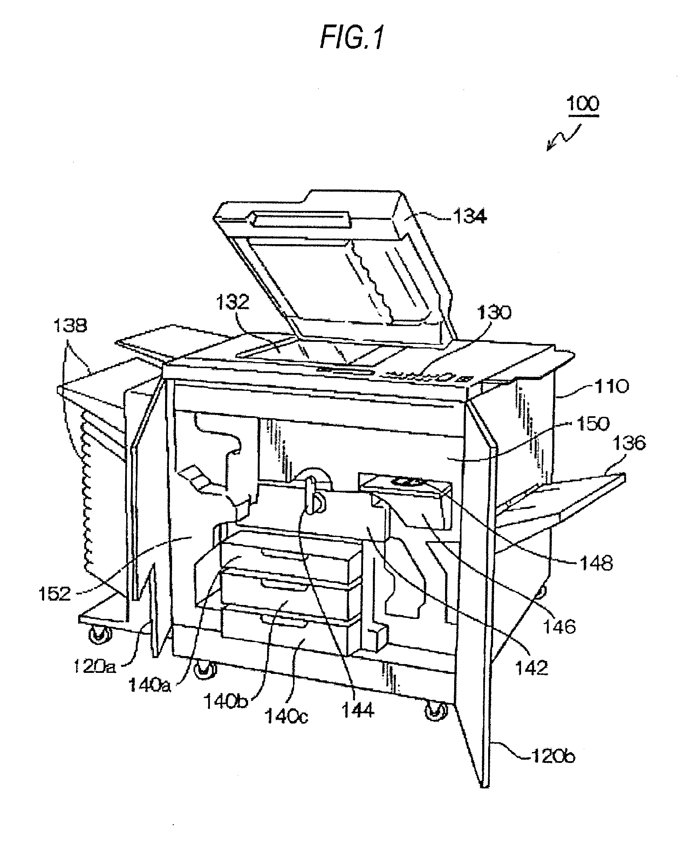

FIG. 1 is a schematic view illustrating an exemplary example of parts of an electronic and electric device including a molded product according to the exemplary embodiment.

### DETAILED DESCRIPTION OF EXEMPLARY EMBODIMENTS

Hereinafter, a crosslinked polymer compound according to the exemplary embodiment and a resin composition and a resin molded product using the crosslinked polymer compound will be described in detail.

### [Crosslinked polymer compound]

The crosslinked polymer compound according to the exemplary embodiment has a crosslinked structure formed by reaction of a carboxyl group of polylactic acid having at least a carboxyl group at an end of its polymer chain with a hydroxyl group of a lignophenol derivative having at least a hydroxyl group in its molecular structure. The compound includes a high-molecular weight component insoluble in hexafluoroisopropanol and a low-molecular weight component soluble in hexafluoroisopropanol, and has a content ratio of the high-molecular weight component of from 2% by mass to 75% by mass based on the total amount of the high-molecular weight component and the low-molecular weight component. The low-molecular weight component has a weight average molecular weight (Mw) of 100,000 or more.

Polylactic acid is an environmentally friendly polymer material derived from plants and has a characteristic in that the acid is hard and brittle. From the viewpoint of improving strength, a method of crosslinking the polylactic acid is contemplated, but when polymer materials are crosslinked, the flexibility thereof is generally impaired, and thus, the materials become hard. From the viewpoint of imparting flexibility, a method of adding a plasticizer is also contemplated, but in this case, the strength is reduced, and currently even though the tensile elongation at break is slightly improved, surface impact strength is reduced.

In contrast, the crosslinked polymer compound according to the exemplary embodiment is a polymer compound having a crosslinked structure formed by reaction of a carboxyl group at an end of a polymer chain of polylactic acid with a hydroxyl group of a lignophenol derivative. The polymer compound has a molecular weight distribution, and a high-molecular weight component thereof having a molecular weight of more than 1,000,000 is insoluble in hexafluoroisopropanol, while a low-molecular weight component thereof having a molecular weight of 1,000,000 or less is soluble in hexafluoroisopropanol.

In the exemplary embodiment, the high-molecular weight component has a content ratio of from 2% by mass to 75% by mass based on the total amount of the high-molecular weight component and the low-molecular weight component, and the low-molecular weight component has a weight average molecular weight (Mw) of 100,000 or more. This configuration has an effect in that a resin molded product having excellent flexibility may be formed is exhibited.

The mechanism that the effect occurs is not clear, but is thought as follows. Polylactic acid is crosslinked by reaction of a carboxylic acid at an end of a molecular chain of polylactic acid with a hydroxyl group present at a lignophenol derivative, which is a reaction occurring at an end. A hydroxyl group is also present at an end of a polymer chain of polylactic acid, but this hydroxyl group is not involved in the reaction. For this reason, it is inferred that the crosslink is formed as a partially loose crosslink, and the molecular weight thereof is three dimensionally increased in a state that a free volume is left to some extent, and thus, very high flexibility such as so-called inter-polymer network (IPN) is exhibited.

To exhibit the effect of excellent flexibility, it is preferred that a high-molecular weight component having a relatively high molecular weight of more than 1,000,000, which is insoluble in hexafluoroisopropanol, is included in an amount of from 2% by mass to 75% by mass, and further, a low-molecular weight component having a relatively low molecular weight of 1,000,000 or less, which is soluble in hexafluoroisopropanol, has a weight average molecular weight (Mw) of 100,000 or more.

### - Content ratio of high-molecular weight component and low-molecular weight component -

The crosslinked polymer compound according to the exemplary embodiment consists of a high-molecular weight component and a low-molecular weight component, as described above. The high-molecular weight component and the low-molecular weight component are divided according to whether the components are insoluble or soluble in hexafluoroisopropanol, and a high-molecular weight component having a molecular weight of more than 1,000,000 is insoluble, and a low-molecular weight component having a molecular weight of 1,000,000 or less is soluble.

In the exemplary embodiment, the high-molecular weight component has a content ratio of from 2% by mass to 75% by mass (that is, the low-molecular weight component has a content ratio of from 25% by mass to 98% by mass) based on the total amount of the high-molecular weight component and the low-molecular weight component.

When the content ratio of the high-molecular weight component is less than 2% by mass, flexibility represented by tensile strain at break or surface impact strength is reduced. Meanwhile, when the content ratio of the high-molecular weight component exceeds 75% by mass (that is, the content ratio of the low-molecular weight component is less than 25% by mass), the melt viscosity is increased, and thus, suitability is reduced when molding such as injection molding and the like is performed, and the compound becomes too hard, and thus, the flexibility thereof also is reduced.

The content ratio of the high-molecular weight component is also preferably from 5% by mass to 70% by mass, and more preferably from 7% by mass to 65% by mass.

The content ratio is calculated by adding the crosslinked polymer compound to hexafluoroisopropanol to divide a soluble part and an insoluble part, and then measuring each mass of the parts.

### - Molecular weight -

In the exemplary embodiment, the weight average molecular weight (Mw) of the low-molecular weight component soluble in hexafluoroisopropanol is 100,000 or more. When the weight average molecular weight of the low-molecular weight component is less than 100,000, the crosslinking is insufficient, and thus, the improvement of flexibility is not exhibited.

Meanwhile, the weight average molecular weight (Mw) of the low-molecular weight component is also preferably 200,000 or more and more preferably 300,000 or more.

The molecular weight distribution (Mw/Mn) of the low-molecular weight component soluble in hexafluoroisopropanol is preferably from 10 to 20, more preferably from 12 to 18, and even more preferably from 14 to 17.

When the molecular weight distribution (Mw/Mn) is 10 or more, a sufficient crosslinked structure is formed, and thus, excellent flexibility may be obtained. Meanwhile, when the molecular weight distribution (Mw/Mn) is 20 or less, compatibility even in components having different molecular weights may be obtained, and thus, a resin molded product having excellent strength may be formed.

Herein, the weight average molecular weight (Mw) and the number average molecular weight (Mn) are measured by gel permeation chromatography (GPC).

In the exemplary embodiment, the molecular weight measurement by GPC is performed with a hexafluoroisopropanol solvent using HLC-3121GPC/HT as a measuring apparatus manufactured by Tosoh Corporation and a column TSKgel SuperHM-M (15 cm) manufactured by Tosoh Corporation. The weight average molecular weight and number average molecular weight are calculated by using a molecular weight calibration curve that is prepared from the measurement results by a monodispersed polystyrene standard sample.

### - Control method -

The above-described content ratios of the high-molecular weight component and low-molecular weight component, and the weight average molecular weight and the molecular weight distribution of the low-molecular weight component, and the like are controlled by adjusting the total molecular weight and the molecular weight distribution of the crosslinked polymer compound according to the exemplary embodiment.

The adjustment of the total molecular weight and the molecular weight distribution of the crosslinked polymer compound may be controlled by, for example, the molecular weight and molecular weight distribution of polylactic acid and a lignophenol derivative, the polymerization ratio of polylactic acid and the lignophenol derivative, a reaction temperature during the crosslinking polymerization, a reaction time, a stirring speed, the presence or absence of catalyst, the kind of catalyst and the like.

### - Lignophenol derivative -

Subsequently, a lignophenol derivative used in the exemplary embodiment will be described.

The lignophenol derivative has at least a hydroxyl group for crosslinking reaction with a carboxyl group in polylactic acid in a molecular structure. The lignophenol derivative is a polymer, and the polymer has a plurality of hydroxyl groups.

The lignophenol derivative used in the exemplary embodiment is not particularly limited, but preferably has a structure represented by the following general formula (1).

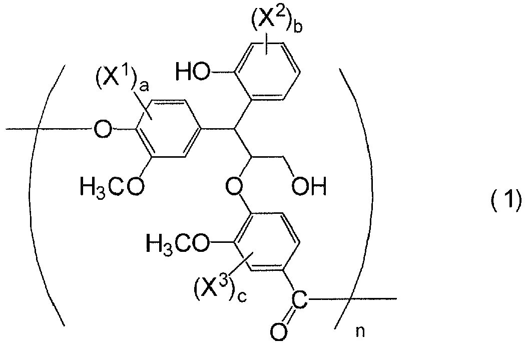

In general formula (1) each of X¹, X² and X³ independently represents a substituted or unsubstituted alkyl group, a substituted or unsubstituted alkoxy group, a substituted or unsubstituted aryl group, a substituted or unsubstituted arylene group, a hydroxyl group, a carboxyl group, an amino group or an amide group.

When each of X¹, X² and X³ is a substituted alkyl group, a substituted alkoxy group, a substituted aryl group or a substituted arylene group, examples of a substituent thereof include a hydroxyl group, a carboxylic acid group, a carboxylic acid derivative group, an alkyl group, an alkoxy group and the like.

In general formula (1), each of a and c represents an integer of from 0 to 3, b represents an integer of from 0 to 4, and n represents an integer of from 10 to 5,000.

More preferred examples of the lignophenol derivative represented by general formula (1) include a lignophenol derivative represented by the following general formula (2) to general formula (4).

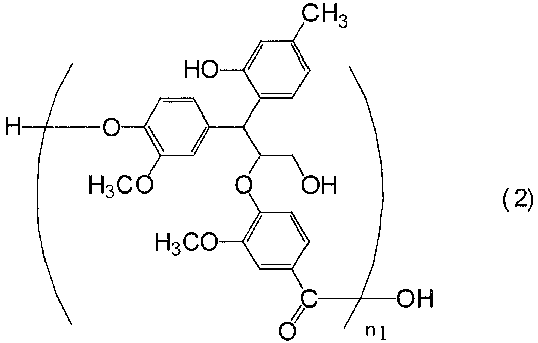

In general formula (2), n1 represents an integer of from 10 to 5,000.

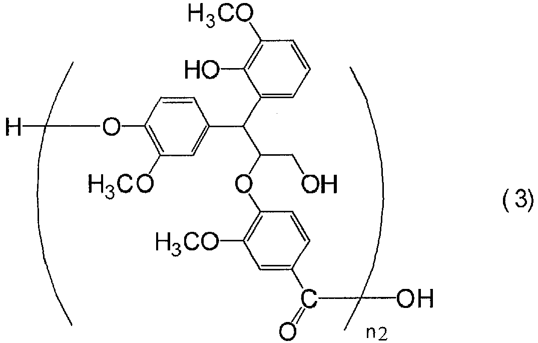

In general formula (3), n2 represents an integer of from 10 to 5,000.

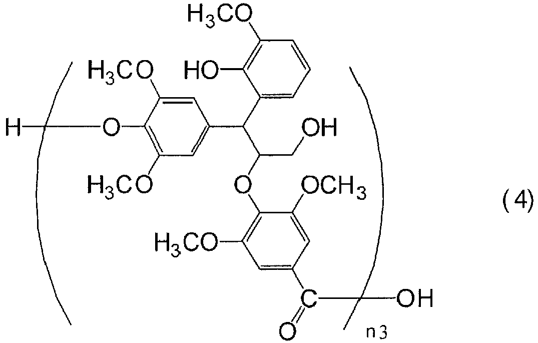

In general formula (4), n3 represents an integer of from 10 to 5,000.

The lignophenol derivative represented by general formula (1) may be a single structure, or may be a mixture of two or more kinds having different structures. Meanwhile, the lignophenol derivative represented by general formula (1) is a polymer mixture, and n in general formula (1) means an average value of n with respect to the total polymer mixture.

The lignophenol derivative used in the exemplary embodiment has a weight average molecular weight (Mw) of preferably from 3,000 to 6,000, and more preferably from 3,500 to 5,500.

The molecular weight distribution (Mw/Mn) is preferably from 3 to 10, and more preferably from 4 to 8.

The melting temperature is preferably from 150 °C to 180 °C, and more preferably from 160 °C to 170 °C.

The weight average molecular weight is measured by gel permeation chromatography (GPC). The molecular weight measurement by GPC is performed with a chloroform solvent using HLC-8320 GPC manufactured by Tosoh Corporation as a measuring apparatus and a column TSKgel GMHHR-M+TSKgel GMHHR-M (7.8 mm I.D. 30 cm) manufactured by Tosoh Corporation. The weight average molecular weight is calculated by using a molecular weight calibration curve that is prepared from the measurement results by a monodispersed polystyrene standard sample.

### - Synthesis method of lignophenol derivative -

Examples of a synthesis method of a lignophenol derivative according the exemplary embodiment include a method, including: converting and separating lignin contained in plant resources such as cypress or cedar into a lignophenol derivative to be extracted, hydrolyzing an end thereof by water addition, and subjecting the end to carboxylation by an oxidation reaction using naturally occurring ketone. The structure of the lignophenol derivative obtained by such a preparation method may vary according to a difference in plant resources such as needle-leaved trees and broad-leaved trees, but there is no problem with characteristics thereof.

For an example of synthesis methods of a lignophenol derivative, a lignophenol derivative may be obtained by first converting lignin contained in plant resources into a lignophenol derivative to separate as a precipitate, washing with water, and subsequently, dissolving the washed precipitate in acetone, adding the resulting solution dropwise to a diethyl ether layer, and subjecting to re-precipitation.

Meanwhile, the weight average molecular weight or the molecular weight distribution (Mw/Mn) of the lignophenol derivative is adjusted by adjusting the repeating number of the processes of the dissolution and re-precipitation.

When the lignophenol derivative used in the exemplary embodiment has a structural unit different from the structural unit represented by general formula (1), the different structural unit may include a polyester structure such as an aliphatic polyester structure, a polycarbonate structure, an aromatic polyester structure, a polyamide structure, a polyolefin structure such as polypropylene and polyethylene, a polystyrene structure, a polyacrylate structure, a polybutadiene structure, a copolymer structure thereof and the like, and among them, an aliphatic polyester structure is preferred. In this case, the polymer may be any one of a block copolymer or a random copolymer.

In the lignophenol derivative used in the exemplary embodiment, the ratio of the structural unit represented by general formula (1) based on the total structural unit is preferably from 5% by mol to 100% by mol, and more preferably from 10% by mol to 100% by mol.

### - Polylactic acid -

The polylactic acid used in the exemplary embodiment is not particularly limited as long as the acid has at least a carboxyl group at an end of a polymer chain (that is, an end of a main chain), and may be an L-lactic acid, a D-lactic acid, or a mixture thereof (for example, a stereo complex with poly-L-lactic acid and poly-D-lactic acid mixed, or a polylactic acid including both an L-lactic acid block and a D-lactic acid block in its structure).

The polylactic acid used in the exemplary embodiment is a resin having a structural unit represented by the following structural formula (1). In the end of a polymer chain (end of a main chain), both ends may be carboxyl groups, or only one end may be a carboxyl group, and the other end may be a different group (for example, a hydroxyl group). However, it is more preferred that both ends are carboxyl groups.

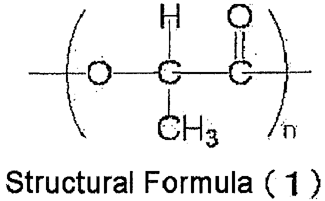

### - Molecular weight -

As the polylactic acid used in the exemplary embodiment, polylactic acids having various molecular weights may be used. However, the smaller the molecular weight is, the stronger the crosslinking becomes, and thus, flexibility tends to be reduced. On the contrary, the larger the molecular weight is, the more insufficient the crosslinking effects, and thus, flexibility tends to be reduced as well. From these viewpoints, the weight average molecular weight is preferably from 50,000 to 150,000, and more preferably from 60,000 to 120,000.

The weight average molecular weight is measured by gel permeation chromatography (GPC). The molecular weight measurement by GPC is performed with a chloroform solvent using HLC-8320 GPC manufactured by Tosoh Corporation as a measuring apparatus and a column TSKgel GMHHR-M+TSKgel GMHHR-M (7.8 mm I.D. 30 cm) manufactured by Tosoh Corporation. The weight average molecular weight is calculated by using a molecular weight calibration curve that is prepared from the measurement results by a monodispersed polystyrene standard sample.

### - Synthesis of crosslinked polymer compound -

The crosslinked polymer compound according to the exemplary embodiment is obtained as a crosslinked polymer compound by mixing the polylactic acid with the lignophenol derivative and melt-kneading the mixture to achieve crosslinking polymerization.

A known means is used as a means for mixing or melt-kneading, and examples thereof include a twin-screw extruder, a Henschel mixer, a Banbury mixer, a single screw extruder, a multi screw extruder, a co-kneader and the like.

When polylactic acid and a lignophenol derivative are subjected to crosslinking polymerization, a crosslinking catalyst may be added thereto.

Examples of the crosslinking catalyst used in the exemplary embodiment include tetrabutoxy titanic acid, germanium oxide, stannous octoate, aluminum oxide and the like.

The amount of the crosslinking catalyst added is preferably from 0.01 % by mass to 1% by mass, and more preferably from 0.05% by mass to 0.5% by mass, based on the total amount of polylactic acid and the lignophenol derivative.

### - Ratio of polylactic acid and lignophenol derivative -

In the crosslinked polymer compound according to the exemplary embodiment, the mass ratio (L/N× 100), wherein the content (N) means a component derived from polylactic acid and the content (L) means a component derived from the lignophenol derivative, is adjusted by amounts of polylactic acid and the lignophenol derivative used in the crosslinking polymerization. Meanwhile, portions bound by polycondensation are calculated by including carboxylic acid oxygen atoms in a polylactic acid structure.

The mass ratio (L/N× 100) is preferably from 0.1% by mass to 10% by mass, and more preferably from 0.2% by mass to 1% by mass.

When the mass ratio is 0.1 % by mass or more, a crosslinking structure is appropriately obtained, and thus, a crosslinked polymer compound capable of forming a resin molded product having excellent flexibility is prepared. Meanwhile, when the mass ratio is 10% by mass or less, the polymer compound is not excessively crosslinked, and thus, is suppressed from becoming hard and brittle, thereby obtaining excellent mechanical strength.

In order to calculate the mass ratio (L/N× 100) from the crosslinked polymer compound according the exemplary embodiment or a resin molded product formed by using the crosslinked polymer compound, the following method is used. First, from the IR (infrared absorption) spectrum, it is confirmed whether the compound is a composition including polylactic acid and a lignophenol derived, and subsequently, the mass of each component is calculated from the intensity of H¹ derived from a benzene ring and proton derived from a methyl group of polylactic acid by H¹-NMR (nuclear magnetic resonance).

### [Resin composition]

A resin composition according to the exemplary embodiment contains the above-described crosslinked polymer compound according to the exemplary embodiment. Other additives may be added to the resin composition.

### (Flame retardant)

The resin composition according to the exemplary embodiment may also contain a flame retardant.

The flame retardant may include bromine-based flame retardants, phosphorus-based flame retardants, silicone-based retardants, inorganic particle-based retardants and the like. Preferred examples of the flame retardant include phosphorus-based flame retardants such as phosphate ester-based, condensed phosphate ester-based and phosphorus polymerized polyester-based flame retardants, silicon-based flame retardants such as silicone powder and silicone resin, inorganic particle-based flame retardants such as aluminum hydroxide and magnesium hydroxide, and the like.

Among them, condensed phosphate ester is preferred. In condensed phosphate ester, it is inferred that some portions thereof are coordinated to functional groups of the lignophenol derivative, and besides, are dispersed in a free volume in the crosslinked structure of the crosslinked polymer compound, and thus, it is inferred that very high dispersibility may be obtained. Accordingly, it is thought that anti-inflammatory effects are accelerated, and thus, excellent flame retardancy may be obtained.

### Condensed phosphate ester

Examples of condensed phosphate ester include aromatic condensed phosphate esters such as bisphenol A type, biphenylene type and isophthal type, and specific examples thereof include condensed phosphate ester represented by the following general formula (I) or general formula (II).

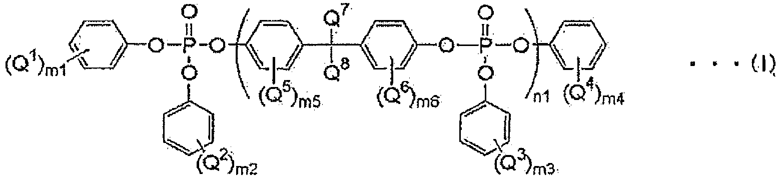

In general formula (I), each of Q¹, Q², Q³ and Q⁴ independently represents a hydrogen atom or an alkyl group having from 1 to 6 carbon atoms, each of Q⁵ and Q⁶ independently represents a methyl group, each of Q⁷ and Q⁸ independently represents a hydrogen atom or a methyl group, each of m1, m2, m3 and m4 independently represents an integer of from 0 to 3, each of m5 and m6 independently represents an integer of from 0 to 2, and n1 represents an integer of from 0 to 10.

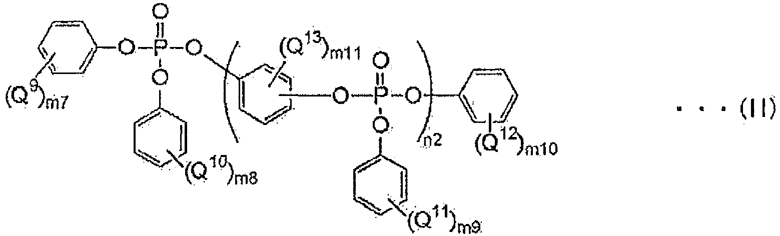

In general formula (II), each of Q⁹, Q¹⁰, Q¹¹ and Q¹² independently represents an alkyl group having from 1 to 6 carbon atoms, Q¹³ represents a methyl group, each of m7, m8, m9 and m10 independently represents an integer of from 0 to 3, m11 represents an integer of from 0 to 4, and n2 represents an integer of from 0 to 10.

The condensed phosphate ester may be a synthetic product or a commercially available product. Specific examples of the commercially available product of condensed phosphate ester include commercially available products ("PX200", "PX201 ", "PX202", "CR741 and the like) manufactured by DAIHACHI CHEMICAL INDUSTRY CO., LTD., commercially available products ("Adekastab FP2100", "FP2200" and the like) manufactured by ADEKA CORPORATION and the like.

Among them, the condensed phosphate ester may be at least one of a compound represented by the following structural formula (1) (for example, "PX200" manufactured by DAIHACHI CHEMICAL INDUSTRY CO., LTD.) and a compound represented by the following structural formula (2) (for example, "CR741" manufactured by DAIHACHI CHEMICAL INDUSTRY CO., LTD.).

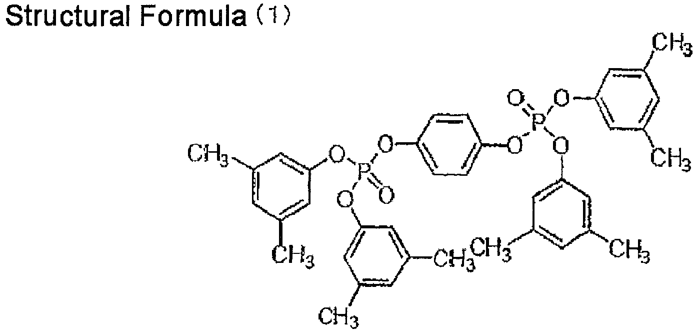

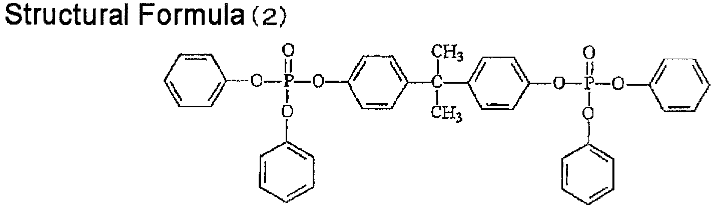

The content of the flame retardant is preferably from 1% by mass to 30% by mass, and more preferably from 3% by mass to 25% by mass, based on the total amount of the resin composition.

Particularly when condensed phosphate ester is used as a flame retardant, the content is preferably from 1 part by mass to 20 parts by mass, and more preferably 5 parts by mass to 10 parts by mass, based on 100 parts by mass of the resin composition.

### (Other resins)

In the resin composition according to the exemplary embodiment, a resin different from the crosslinked polymer compound may be used in combination. The resin which is used in combination may include thermoplastic resins known in the related art, such as polyesters such as aliphatic polyesters and polycarbonates, and among them, aliphatic polyesters are preferred.

### - Aliphatic polyesters

The aliphatic polyester which is used in combination is not particularly limited, but examples thereof include hydroxycarboxylic acid polymers, a polycondensate of aliphatic diol and aliphatic carboxylic acid and the like.

Specific examples of the aliphatic polyester include poly-3-hydroxybutyrate, polyhydroxyhexanate, polyhydroxyvalerate, a copolymer thereof and the like, and polybutylene succinate, polybutylene adipate, polyethylene succinate, polyethylene adipate, a copolymer of two or more kinds thereof and the like.

As the aliphatic polyester, for example, a single continuous product (for example, polyhydroxybutyrate) may be used, optical isomers may be intermixed, or a copolymer thereof may be used.

The weight average molecular weight of the aliphatic polyester is not particularly limited, but may be, for example, from 8,000 to 150,000, and preferably from 20,000 to 100,000.

Examples of resins other than aliphatic polyesters include thermoplastic resins known in the related art, and specific examples thereof include a polycarbonate resin, a polypropylene resin, a polyamide resin, an aromatic polyester resin, a polyolefin resin, a polyester carbonate resin, a polyphenylene ether resin, a polyphenylenesulfide resin, a polysulfone resin, a polyethersulfone resin, a polyarylene resin, a polyetherimide resin, a polyacetal resin, a polyvinyl acetal resin, a polyketone resin, a polyether ketone resin, a polyether ether ketone resin, a polyaryl ketone resin, a polyether nitrile resin, a liquid crystal resin, a polybenzimidazole resin, a polyparabanic acid resin, a vinyl polymer or copolymer resin that is obtained by polymerizing or copolymerizing at least one vinyl monomers selected from the group consisting of an aromatic alkenyl compound, a methacrylic acid ester, an acrylic acid ester and a cyanated vinyl compound, a copolymer resin of a diene and an aromatic alkenyl compound, a copolymer resin of a cyanated vinyl, a diene, and an aromatic alkenyl compound, a copolymer resin of an aromatic alkenyl compound, a diene, a cyanated vinyl, and an N-phenylmaleimide, a copolymer resin of a cyanated vinyl, an (ethylene-diene-propylene (EPDM)), and an aromatic alkenyl compound, polyolefin, a vinyl chloride resin, a chlorinated vinyl chloride resin and the like.

These resins may be used either alone or in combination of two or more thereof.

When the resin composition according to the exemplary embodiment further contains another resin in addition to the crosslinked polymer compound according to the exemplary embodiment, the content of the another resin is preferably from 5% by mass to 50% by mass, and more preferably from 10% by mass to 30% by mass, based on the amount of the crosslinked polymer compound according to the exemplary embodiment.

### (Other additives)

Examples of an additive added to the resin composition include an antioxidant, a toughening agent, a compatibilizer, a weathering agent, a hydrolysis resistant agent and the like. Each of the contents of these additives is preferably 5% by mass or less based on the total amount of the resin composition.

### [Molded product]

A resin molded product according to the exemplary embodiment is configured by including the crosslinked polymer compound according to the exemplary embodiment.

Specifically, the molded product according to the exemplary embodiment is obtained, for example, by molding the resin composition according to the exemplary embodiment by a molding machine. Meanwhile, examples of the molding method by a molding machine include injection molding, extrusion molding, blow molding, heat press molding, calendar molding, coating molding, cast molding, dipping molding, vacuum molding, transfer molding and the like.

Herein, the injection molding may be performed by using, for example, a commercially available apparatus such as NEX 150 manufactured by Nissei Plastic Industrial Co., Ltd., NEX 70000 manufactured by Nissei Plastic Industrial Co., Ltd., and SE50D manufactured by TOSHIBA MACHINE CO., LTD..

In this case, the cylinder temperature is preferably from 170 °C to 280 °C, and more preferably from 180 °C to 270 °C. The mold temperature is preferably from 40 °C to 110 °C, and more preferably from 50 °C to 110 °C.

The molded product according to the exemplary embodiment is suitably used in the use such as electronic and electric devices, home electric appliances, containers and automotive interior materials. More specific examples thereof include cases for home electric appliances, electronic and electric devices and the like, various parts and the like, wrapping films, storage cases for CD-ROM, DVD and the like, tableware, food trays, beverage bottles, chemical wrapping materials and the like, and among them, the molded product is appropriate for parts for electronic and electric devices.

FIG. 1 is an external perspective view of an image forming apparatus, which is an example of parts of an electronic and electric device provided with the molded product according to the exemplary embodiment, when viewed from the front side thereof.

An image forming apparatus 100 of FIG. 1 is provided with front covers 120a and 120b in front of a main product apparatus 110. These front covers 120a and 120b are configured to be freely opened and closed such that an operator may manipulate inner parts of the apparatus. Accordingly, the operator replenishes a toner when the toner is consumed, exchanges a consumed process cartridge, or removes clogged papers when jamming occurs in the apparatus. FIG. 1 illustrates the apparatus in a state where the front covers 120a and 120b are opened.

An operation panel 130 to which various conditions relating to image formation, such as a paper size or the number of copies are input by the operation of the operator, and a copy glass 132 on which an original copy to be read off is disposed are provided on the upper surface of the main product apparatus 110. The main product apparatus 110 is provided with, on the upper portion thereof, an automatic original copy conveying apparatus 134 that conveys the original copy on the copy glass 132. The main product apparatus 110 is provided with an image reading apparatus that obtains image data showing an image on the original copy by scanning the image on the original copy disposed on the copy glass 132. The image data obtained by the image reading apparatus are sent to an image forming unit through a control part. Meanwhile, the image reading apparatus and the control part are housed in a case 150 constituting a part of the main product apparatus 110. The image forming unit is provided in the case 150 as a freely detachable process cartridge 142. The process cartridge 142 may be detached and attached by turning an operation lever 144.

A toner storage part 146 is attached to the case 150 of the main product apparatus 110, and a toner is replenished from a toner supply port 148. The toner housed in the toner storage part 146 is supplied to a development apparatus.

Meanwhile, paper storage cassettes 140a, 140b and 140c are provided on the bottom part of the main product apparatus 110. A plurality of conveying rollers composed of a pair of rollers are arranged in the main product apparatus 110, and thus a conveying path is formed where papers in the paper storage cassettes are conveyed to the image forming unit located at the upper part thereof. Meanwhile, paper in each paper storage cassette is ejected one by one by a paper eject mechanism disposed at the end of the conveying path, and is sent out to the conveying path. A manual paper supply part 136 is provided at the side of the main product apparatus 110, and paper is also supplied therefrom.

The paper having an image formed thereon by the image forming unit is successively transported between two fixing rolls mutually in contact, supported by a case 152 constituting a part of the main product apparatus 110, and then paper-ejected to the outside of the main product apparatus 110. The main product apparatus 110 is provided with a plurality of paper discharge parts 138 at the opposite side of the side at which the paper supply part 136 is provided, and papers after image formation are discharged to these paper discharge parts.

In the image forming apparatus 100, the molded product according to the exemplary embodiment is used in, for example, the front covers 120a and 120b, an exterior of the process cartridge 142, the case 150 and the case 152.

### EXAMPLE

Hereinafter, the present invention will be described in detail with reference to Examples, but the present invention is not limited thereto. "Parts" and "%" are on a mass basis unless otherwise specified.

### <Preparation of lignophenol derivative>

### (Lignophenol derivative A)

1 kg of cypress wood flour is washed with 10 L of acetone in a 20-liter stirring autoclave and filtered, and the wood flour after completion of the washing is dried under conditions of 60 °C/20 Pa for 4 hour by a vacuum dryer. The wood flour is placed into the 20-liter stirring autoclave and dissolved in 5 L of cresol, 5 L of 72% concentrated sulfuric acid is added thereto, and the mixture is stirred for 5 hour while cooling the autoclave such that the temperature is not increased. Only the cresol layer is extracted and concentrated until the volume reaches 500 ml, 1 L of diethyl ether is added thereto, the mixture is stirred, and then the solid content dispersed is filtered. This is dissolved in 5 L of acetone and the mixture is concentrated until the volume reaches 200 ml, the mixture is added dropwise to 5 L of distilled water to suction-filter the insolubles, and a process of "dissolution in acetone-concentration-dropwise addition into distilled water" is repeated five times again. In this way, lignophenol derivative A is obtained.

### (Lignophenol derivative B)

Lignophenol derivative B is obtained by the same manner as in the preparation method in lignophenol derivative A, except that the process of "dissolution in acetone-concentration-dropwise addition into distilled water" is repeated ten times.

### (Lignophenol derivative C)

Lignophenol derivative C is obtained by the same manner as in the preparation method in lignophenol derivative A, except that the process of "dissolution in acetone-concentration-dropwise addition into distilled water" is repeated twice.

### (Lignophenol derivative D)

Lignophenol derivative D is obtained by the same manner as in the preparation method in lignophenol derivative A, except that the process of "dissolution in acetone-concentration-dropwise addition into distilled water" is repeated thirty times.

### (Lignophenol derivative E)

Lignophenol derivative E is obtained by the same manner as in the preparation method in lignophenol derivative A, except that cedar wood flour is used instead of cypress wood flour as a raw material.

### (Lignophenol derivative F)

Lignophenol derivative F is obtained by the same manner as in the preparation method in lignophenol derivative B, except that cedar wood flour is used instead of cypress wood flour as a raw material.

The chemical structures of Lignophenol derivative A to F are shown below.

### Lignophenol derivative A

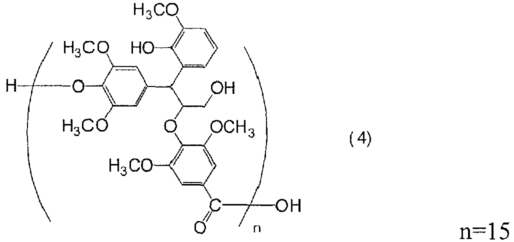

### Lignophenol derivative B

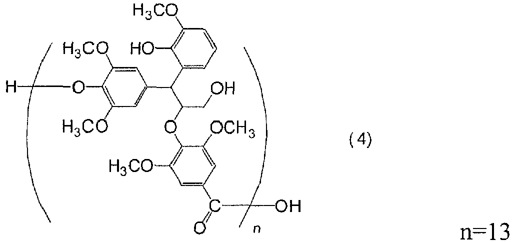

### Lignophenol derivative C

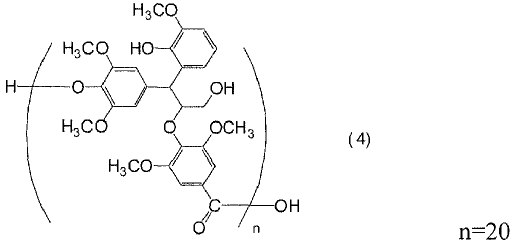

### Lignophenol derivative D

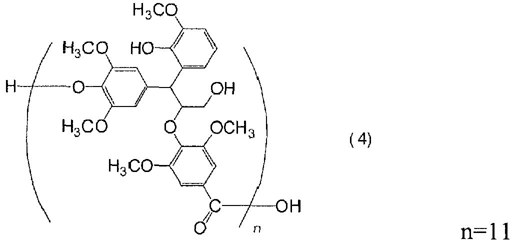

### Lignophenol derivative E

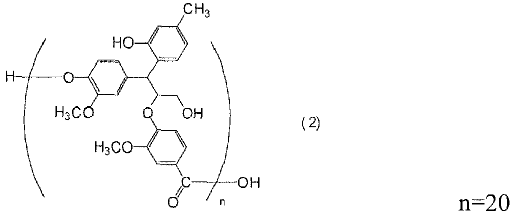

### Lignophenol derivative F

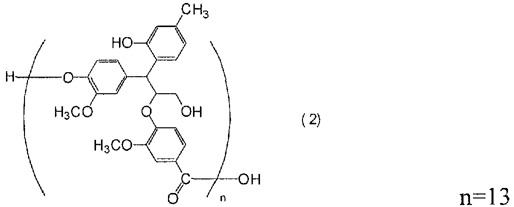

The molecular weight (Mw) and molecular weight distribution (Mw/Mn) of each lignophenol derivative are shown in the following Table 1.

**Table 1**

| Lignophenol derivative | Raw material | Molecular weight [Mw] | Molecular weight distribution [Mw/Mn] |
|---|---|---|---|
| A | Cypress | 5890 | 9.8 |
| B | Cypress | 3025 | 3.1 |
| C | Cypress | 6550 | 10.8 |
| D | Cypress | 2890 | 2.8 |
| E | Cedar | 5950 | 9.9 |
| F | Cedar | 3150 | 3.3 |

### [Examples 1 to 30 and Comparative Examples 1 to 5]

### <Preparation of resin composition>

A lignophenol derivative, polylactic acid, a polymerization catalyst and an additive are prepared in amounts shown in the following Tables 2 and 3. Among them, the mixture of the lignophenol derivative, polylactic acid and the additive is kneaded at the cylinder temperature and discharge amount shown in Tables 2 and 3 from a main hopper with a twin-screw extrusion apparatus (manufactured by Toshiba Machine Co., Ltd., TEM3000) by a method of supplying a polymerization catalyst from a side feed hopper, cooled and pelletized to obtain a pellet type resin composition (resin pellet).

### - Measurement of values of physical properties -

0.1 g of the resin pellet is added to 100 g of hexafluoroisopropanol (HFIP), the mixture is stirred at room temperature (25°C) for 1 hour, and then an undissolved component (high-molecular weight component) is removed by filtration to measure the mass of the high-molecular weight component.

Subsequently, for a component (low-molecular weight component) which has been dissolved in hexafluoroisopropanol, the weight average molecular weight (Mw) and molecular weight distribution (Mw/Mn) thereof are obtained by gel permeation chromatography (Tosoh Corporation, HLC-3121 GPC/HT).

The content ratio of the HFIP insoluble matter (high-molecular weight component) and the weight average molecular weight (Mw) and molecular weight distribution (Mw/Mn) of the HFIP soluble matter (low-molecular weight component) are shown in the following Tables 2 and 3.

**Table 2**

| | | Composition | Lignophenol derivative | | Polylactic acid | | Polymerization catalyst | | Additive | | Kneading cylinder temperature [°C] | Kneading discharge amount [kg/hr] | HFIP insoluble matter [mass%] | Mw | Mw/Mn |
|---|---|---|---|---|---|---|---|---|---|---|---|---|---|---|---|
| | | | Kind | Part | Kind | Part | Kind | Part | Kind | Part | | | | | |
| | 1 | A-1 | (A) | 0.2 parts | (G) | 100 parts | - | 0 | - | 0 | 190 | 1 | 18 | 350,000 | 12.5 |
| | 2 | A-2 | (A) | 0.1 parts | (G) | 100 parts | - | 0 | - | 0 | 190 | 1 | 15 | 420,000 | 17.2 |
| | 3 | A-3 | (A) | 1 part | (G) | 100 parts | - | 0 | - | 0 | 190 | 1 | 14 | 520,000 | 19.2 |
| | 4 | A-4 | (A) | 0.08 parts | (G) | 100 parts | - | 0 | - | 0 | 190 | 1 | 3 | 310,000 | 14.2 |
| | 5 | A-5 | (A) | 1.1 parts | (G) | 100 parts | - | 0 | - | 0 | 190 | 1 | 9 | 680,000 | 15.8 |
| | 6 | A-6 | (A) | 0.2 parts | (H) | 100 parts | - | 0 | - | 0 | 190 | 1 | 48 | 850,000 | 17.9 |
| | 7 | A-7 | (A) | 0.2 parts | (I) | 100 parts | - | 0 | - | 0 | 190 | 1 | 64 | 980,000 | 19,8 |
| | 8 | A-8 | (A) | 0.2 parts | (G) | 100 parts | (J) | 0.04 parts | - | 0 | 190 | 1 | 47 | 850,000 | 10.2 |
| | 9 | A-9 | (A) | 0.2 parts | (G) | 100 parts | (J) | 0.05 parts | - | 0 | 190 | 1 | 44 | 840,000 | 11.5 |
| Example | 10 | A-10 | (A) | 0.2 parts | (G) | 100 parts | (J) | 0.02 parts | - | 0 | 190 | 1 | 38 | 650,000 | 14.2 |
| | 11 | A-11 | (A) | 0.2 parts | (G) | 100 parts | (K) | 0.04 parts | - | 0 | 190 | 1 | 34 | 600,000 | 15.8 |
| | 12 | A-12 | (A) | 0.2 parts | (G) | 100 parts | - | 0 | (L) | 10 parts | 190 | 1 | 11 | 300,000 | 14.2 |
| | 13 | A-13 | (A) | 0.2 parts | (G) | 100 parts | - | 0 | (L) | 20 parts | 190 | 1 | 14 | 280,000 | 14.3 |
| | 14 | A-14 | (A) | 0.2 parts | (G) | 100 parts | - | 0 | (L) | 25 parts | 190 | 1 | 12 | 220,000 | 15.2 |
| | 15 | A-15 | (A) | 0.2 parts | (G) | 100 parts | - | 0 | (M) | 20 parts | 190 | 1 | 10 | 110,000 | 12.8 |
| | 16 | A-16 | (A) | 0.2 parts | (G) | 100 parts | (J) | 0.04 parts | (L) | 20 parts | 190 | 1 | 18 | 480,000 | 16.5 |
| | 17 | A-17 | (A) | 0.2 parts | (G) | 100 parts | (J) | 0.04 parts | - | 0 | 170 | 1 | 9 | 250,000 | 11.2 |
| | 18 | A-18 | (A) | 0.2 parts | (G) | 100 parts | (J) | 0.04 parts | - | 0 | 190 | 0.5 | 71 | 990,000 | 19.8 |
| | 19 | A-19 | (A) | 0.2 parts | (G) | 100 parts | (J) | 0.04 parts | - | 0 | 190 | 2 | 32 | 680,000 | 14.5 |

**Table 3**

| | | Composition | Lignophenol derivative | | Polylactic acid | | Polymerization catalyst | | Additive | | Kneading cylinder temperature [°C] | Kneading discharge amount [kg/hr] | HFIP insoluble matter [mass%] | Mw | Mw/Mn |
|---|---|---|---|---|---|---|---|---|---|---|---|---|---|---|---|
| | | | Kind | Part | Kind | Part | Kind | Part | Kind | Part | | | | | |
| Example | 20 | A-20 | (B) | 0.2 parts | (G) | 100 parts | - | 0 | - | 0 | 190 | 1 | 32 | 850,000 | 12.5 |
| | 21 | A-21 | (C) | 0.2 parts | (G) | 100 parts | - | 0 | - | 0 | 190 | 1 | 11 | 150,000 | 18.4 |
| | 22 | A-22 | (D) | 0.2 parts | (G) | 100 parts | - | 0 | - | 0 | 190 | 1 | 28 | 780,000 | 13.2 |
| | 23 | A-23 | (E) | 0.2 parts | (G) | 100 parts | - | 0 | - | 0 | 190 | 1 | 20 | 350,000 | 15.6 |
| | 24 | A-24 | (F) | 0.2 parts | (G) | 100 parts | - | 0 | - | 0 | 190 | 1 | 15 | 130,000 | 18.2 |
| | 25 | A-25 | (A) | 0.2 parts | (G) | 100 parts | - | 0 | (N) | 10 parts | 190 | 1 | 11 | 240,000 | 18.5 |
| | 26 | A-26 | (A) | 0.2 parts | (G) | 100 parts | - | 0 | (O) | 10 parts | 190 | 1 | 15 | 210,000 | 19.6 |
| | 27 | A-27 | (A) | 10 parts | (G) | 100 parts | - | 0 | - | 0 | 190 | 1 | 12 | 250,000 | 15.6 |
| | 28 | A-28 | (A) | 11 parts | (G) | 100 parts | - | 0 | - | 0 | 190 | 1 | 18 | 200,000 | 16.5 |
| | 29 | A-29 | (A) | 0.2 parts | (G) | 100 parts | (J) | 0.04 parts | - | 0 | 190 | 10 | 40 | 450,000 | 22.5 |
| | 30 | A-30 | (A) | 0.2 parts | (G) | 100 parts | (J) | 0.04 parts | (L) | 20 parts | 190 | 10 | 32 | 330,000 | 23.8 |
| Comparative Example | 1 | B-1 | | 0 part | (G) | 100 parts | - | 0 | - | 0 | 190 | 1 | 0 | 100,000 | 2.8 |
| | 2 | B-2 | | 0 part | (H) | 100 parts | - | 0 | - | 0 | 190 | 1 | 0 | 50,000 | 3.2 |
| | 3 | B-3 | | 0 part | (I) | 100 parts | - | 0 | - | 0 | 190 | 1 | 0 | 7,000 | 5.6 |
| | 4 | B-4 | (A) | 0.2 parts | (G) | 100 parts | - | 0 | - | 0 | 160 | 1 | 1 | 220,000 | 9.2 |
| | 5 | B-5 | (A) | 0.2 parts | (G) | 100 parts | - | 0 | - | 0 | 190 | 10 | 0 | 80,000 | 5.5 |

Each component used in Tables 2 and 3 is described as follows.
Polylactic acid G: (manufactured by UNITIKA LTD., trade name thereof is TERRAMAC TE2000), weight average molecular weight 120,000
Polylactic acid H: (manufactured by Mitsui Chemicals, Inc., trade name thereof is LACEA H100), weight average molecular weight 60,000
Polylactic acid I: (manufactured by TOYOBO CO., LTD., trade name thereof is Bio Eco Roll), weight average molecular weight 8,000
Polymerization catalyst J: manufactured by Wako Pure Chemical Industries, Ltd., tetrabutoxy titanic acid
Polymerization catalyst K: manufactured by Wako Pure Chemical Industries, Ltd., germanium oxide
Additive (flame retardant) L: condensed phosphate ester, manufactured by DAIHACHI CHEMICAL INDUSTRY CO., LTD., trade name thereof is PX200
Additive (flame retardant) M: condensed phosphate ester, manufactured by DAIHACHI CHEMICAL INDUSTRY CO., LTD., trade name thereof is CR741
Additive (flame retardant) N: ammonium polyphosphate, manufactured by Clariant Co., trade name thereof is AP422
Additive (flame retardant) O: bromine-based compound, manufactured by SUZUHIRO CHEMICAL CO., LTD., trade name thereof is FIRECUT P-83D

### <Manufacture of resin molded product>

The resin pellet is manufactured into an ISO multi-purpose dumbbell test specimen (length 100 mm, width 10 mm and thickness 4 mm of test part) and a square flat plate (60 × 60 mm, thickness 2 mm) at the cylinder temperature and mold temperate shown in Tables 4 and 5 by using an injection molding machine (manufactured by Nissei Plastic Industrial Co., Ltd., NEX 150).

[Evaluation test]

### - Tensile strain at break (flexibility) -

The flexibility is evaluated by processing the ISO multi-purpose dumbbell test specimen and performing a tensile test in accordance with ISO527-1 with a material testing machine (manufactured by TOYO SEIKI SEISAKU-SHO, LTD., Instron VR6) to measure the tensile strain at break.

### - Surface impact strength -

Subsequently, the square flat plate is used to measure the surface impact strength with a surface impact measuring apparatus (manufactured by TOYO SEIKI Co., Ltd., sheet impact tester). As the specific measurement method, an indenter controlled with a load cell is tightly pressed into the square flat plate to measure an energy required until the square flat plate is broken.

The results as described above are shown in Tables 4 and 5.

**Table 4**

| | | Composition | Molding cylinder temperature [°C] | Mold temperature [°C] | Tensile strain at break [%] | Surface impact strength [J] |
|---|---|---|---|---|---|---|
| Example | 1 | A-1 | 180 | 40 | 52.5 | 16.8 |
| | 2 | A-2 | 180 | 40 | 43.2 | 14.2 |
| | 3 | A-3 | 180 | 40 | 40.5 | 12.8 |
| | 4 | A-4 | 180 | 40 | 22.3 | 10.8 |
| | 5 | A-5 | 180 | 40 | 19.8 | 12.5 |
| | 6 | A-6 | 180 | 40 | 54.8 | 16.8 |
| | 7 | A-7 | 180 | 40 | 55.5 | 18.9 |
| | 8 | A-8 | 180 | 40 | 71.5 | 18.8 |
| | 9 | A-9 | 180 | 40 | 69.8 | 16.2 |
| | 10 | A-10 | 180 | 40 | 64.5 | 14.5 |
| | 11 | A-11 | 180 | 40 | 29.8 | 11.2 |
| | 12 | A-12 | 180 | 40 | 48.5 | 18.9 |
| | 13 | A-13 | 180 | 40 | 44.2 | 19.5 |
| | 14 | A-14 | 180 | 40 | 40.2 | 16.5 |
| | 15 | A-15 | 180 | 40 | 28.5 | 10.9 |
| | 16 | A-16 | 180 | 40 | 55.9 | 19.2 |
| | 17 | A-17 | 180 | 40 | 29.5 | 11.2 |
| | 18 | A-18 | 180 | 40 | 66.1 | 20.5 |
| | 19 | A-19 | 180 | 40 | 21.2 | 10.8 |

**Table 5**

| | | Composition | Molding cylinder temperature [°C] | Mold temperature [°C] | Tensile strain at break [%] | Surface impact strength [J] |
|---|---|---|---|---|---|---|
| Example | 20 | A-20 | 180 | 40 | 59.5 | 21.2 |
| | 21 | A-21 | 180 | 40 | 29.5 | 10.8 |
| | 22 | A-22 | 180 | 40 | 60.8 | 20.8 |
| | 23 | A-23 | 180 | 40 | 31.2 | 14.2 |
| | 24 | A-24 | 180 | 40 | 25.8 | 10.5 |
| | 25 | A-25 | 180 | 40 | 11.5 | 10.3 |
| | 26 | A-26 | 180 | 40 | 10.8 | 10.1 |
| | 27 | A-27 | 180 | 40 | 19.5 | 13.5 |
| | 28 | A-28 | 180 | 40 | 10.8 | 10.1 |
| | 29 | B-6 | 180 | 40 | 18.5 | 9.8 |
| | 30 | B-7 | 180 | 40 | 9.5 | 7.8 |
| Comparative Example | 1 | B-1 | 170 | 30 | 3.5 | 1.7 |
| | 2 | B-2 | 170 | 30 | 3.8 | 1.5 |
| | 3 | B-3 | 160 | 30 | 4.8 | 2.8 |
| | 4 | B-4 | 180 | 40 | 5.6 | 6.5 |
| | 5 | B-5 | 180 | 40 | 3.2 | 1.9 |

## Claims

1. A crosslinked polymer compound, comprising:
a crosslinked structure formed by reaction of a carboxyl group of polylactic acid having at least a carboxyl group at an end of a polymer chain of the polylactic acid with a hydroxyl group of a lignophenol derivative having at least a hydroxyl group in a molecular structure of the lignophenol derivative,
wherein the compound comprises a high-molecular weight component insoluble in hexafluoroisopropanol and a low-molecular weight component soluble in hexafluoroisopropanol,
a content ratio of the high-molecular weight component is from 2% by mass to 75% by mass based on the total amount of the high-molecular weight component and the low-molecular weight component, and
the low-molecular weight component has a weight average molecular weight of 100,000 or more.

2. The crosslinked polymer compound according to claim 1,
wherein the low-molecular weight component has a molecular weight distribution, which is represented as "weight average molecular weight/ number average molecular weight", of from 10 to 20.

3. The crosslinked polymer compound according to claim 1 or 2,
wherein a mass ratio of a content of a component derived from the lignophenol derivative to a content of a component derived from the polylactic acid is from 0.1% by mass to 10% by mass.

4. The crosslinked polymer compound according to any one of claims 1 to 3,
wherein the content ratio of the high-molecular weight component is from 7% by mass to 65% by mass based on the total amount of the high-molecular weight component and the low-molecular weight component.

5. The crosslinked polymer compound according to any one of claims 1 to 4,
wherein the low-molecular weight component has a molecular weight distribution, which is represented as "weight average molecular weight/ number average molecular weight", of from 14 to 17.

6. The crosslinked polymer compound according to any one of claims 1 to 5,
wherein the lignophenol derivative is represented by Formula (1): 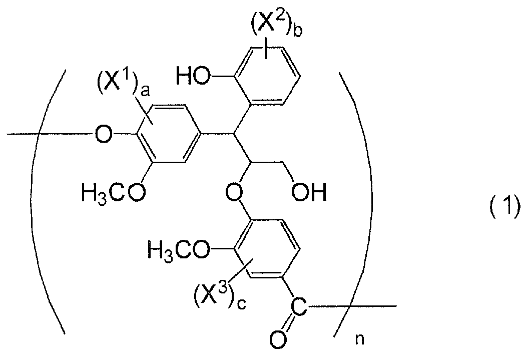 wherein,
each of X¹, X² and X³ independently represents a substituted or unsubstituted alkyl group, a substituted or unsubstituted alkoxy group, a substituted or unsubstituted aryl group, a substituted or unsubstituted arylene group, a hydroxyl group, a carboxyl group, an amino group or an amide group, each of a and c represents an integer of from 0 to 3, b represents an integer of from 0 to 4, and n represents an integer of from 10 to 5000.

7. The crosslinked polymer compound according to any one of claims 1 to 5,
wherein the lignophenol derivative represented by one selected from the group consisting of Formula (2), Formula (3) and Formula (4): 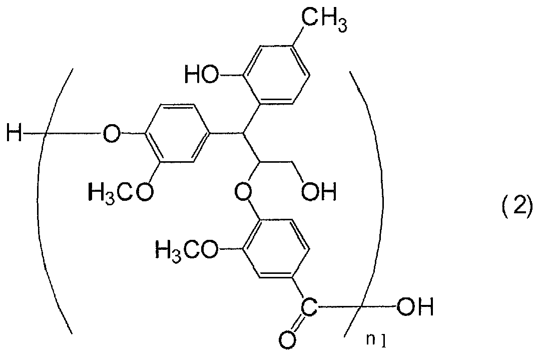 wherein n1 represents an integer of from 10 to 5000: 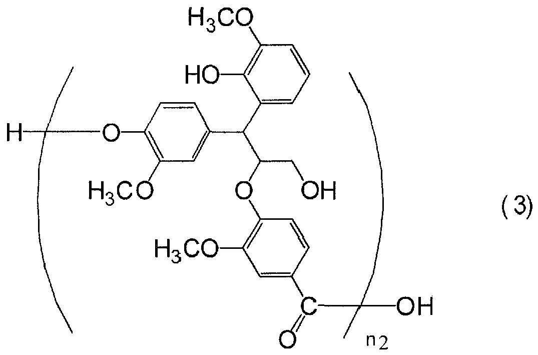 wherein n2 represents an integer of from 10 to 5000: 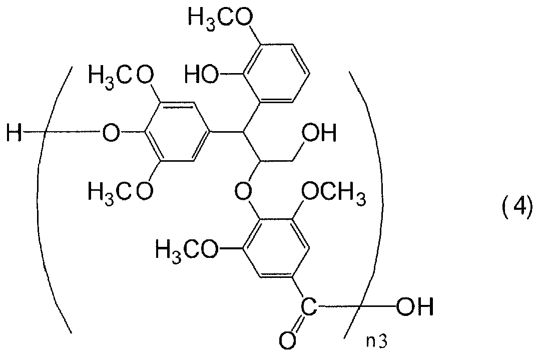 wherein n3 represents an integer of from 10 to 5000.

8. The crosslinked polymer compound according to any one of claims 1 to 7, wherein the lignophenol derivative has a ratio of a weight average molecular weight to a number average molecular weight of from 3 to 10.

9. A resin composition comprising the crosslinked polymer compound according to any one of claims 1 to 8.

10. The resin composition according to claim 9, further comprising condensed ester phosphate.

11. The resin composition according to claim 9 or 10, wherein the condensed ester phosphate has an amount of from 1 part by mass to 30 parts by mass based on the 100 parts by mass of the resin composition.

12. A resin molded product comprising the crosslinked polymer compound according to any one of claims 1 to 8.

13. The resin molded product according to claim 12, further comprising condensed ester phosphate.

14. The resin molded product according to claim 12 or 13,
wherein the condensed ester phosphate has an amount of from 1 part by mass to 30 parts by mass based on the 100 parts by mass of the resin molded product.
